(19) Europäisches Patentamt / European Patent Office / Office européen des brevets

(11) **EP 2 515 228 B1**

(12) # FASCICULE DE BREVET EUROPEEN

(45) Date de publication et mention
de la délivrance du brevet:
**13.11.2013 Bulletin 2013/46**

(51) Int Cl.:
**_G06F 7/72_** _(2006.01)_

(21) Numéro de dépôt: **12162002.5**

(22) Date de dépôt: **29.03.2012**

(54) **Procédé de multiplication de Montgomery**

Multiplikationsverfahren nach Montgomery

Montgomery multiplication method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2011 FR 1153359**

(43) Date de publication de la demande:
**24.10.2012 Bulletin 2012/43**

(73) Titulaire: **Inside Secure
13856 Aix-en-Provence Cedex 3 (FR)**

(72) Inventeur: **Niel, Michael
83140 Six-Fours-les-Plages (FR)**

(74) Mandataire: **de Jong, Jean Jacques
Omnipat
24, place des Martyrs de la Résistance
13100 Aix en Provence (FR)**

(56) Documents cités:
- **CETIN KAYA KOC ET AL: "Analyzing and Comparing Montgomery Multiplication Algorithms", INTERNET CITATION, 1 juin 1996 (1996-06-01), page 18PP, XP007918509, Extrait de l'Internet: URL:http://citeseer.ist.psu.edu/ viewdoc/do wnload [extrait le 2011-05-04]**
- **KELLEY K ET AL: "Very High Radix Scalable Montgomery Multipliers", SYSTEM-ON-CHIP FOR REAL-TIME APPLICATIONS, 2005. PROCEEDINGS. FIFTH IN TERNATIONAL WORKSHOP ON BANFF, AB, CANADA 20-24 JULY 2005, PISCATAWAY, NJ, USA,IEEE, 20 juillet 2005 (2005-07-20), pages 400-404, XP010851979, DOI: 10.1109/IWSOC.2005.111 ISBN: 978-0-7695-2403-0**
- **Cetin K Koc: "RSA Hardware Implementation", RSA Lalboratories, 1 août 1995 (1995-08-01), pages 1-30, XP055018548, Extrait de l'Internet: URL:http://cs.ucsb.edu/~koc/docs/r02.pdf [extrait le 2012-02-07]**

**Description**

**Domaine technique de l'invention**

L'invention est relative à l'algorithme de Montgomery pour effectuer une multiplication modulaire, aussi appelée multiplication de Montgomery, et notamment à un circuit électronique optimisé pour effectuer le produit.

**État de la technique**

L'algorithme de Montgomery est décrit dans ["Modular Multiplication Without Trial Division", Peter Montgomery, Mathematics of Computation, vol. 44, pp. 519-521, 1985]. Selon l'algorithme de Montgomery, lorsqu'il est appliqué aux nombres binaires, on cherche à calculer la valeur :

$$R = XY \cdot 2^{-L} \bmod M \qquad (1)$$

Où R, X, Y et M sont des nombres de L bits. M est le modulo ; il est impair et supérieur à X et à Y.

Ce calcul est souvent utilisé pour effectuer des exponentiations modulaires en cryptographie, où les nombres sont « grands », c'est-à-dire que le nombre de bits L est de plusieurs centaines, par exemple 512. L'algorithme permet alors de simplifier les calculs en limitant le nombre de divisions et en limitant la taille des résultats de multiplication intermédiaires à la taille des multiplicandes.

Pour mettre en oeuvre le calcul, on peut procéder par itérations bit à bit selon la boucle suivante :

$$R := 0$$

$$\text{pour } i \text{ allant de } 0 \text{ à L-1 faire}$$

$$m_{[i]} := (R + XY_{[i]}) \bmod 2$$

$$R := (R + XY_{[i]} + m_{[i]}M)/2$$

$$\text{fin pour} \qquad (2)$$

L'indice [i] désigne le bit de poids i. Dans la première étape de l'itération on détermine un bit $m_{[i]}$ dont la parité est égale à celle de la somme $R + XY_{[i]}$. Ainsi, dans la deuxième étape, comme M est impair, la somme $R + XY_{[i]} + m_{[i]}M$ est paire; sa division par 2 (décalage à droite) diminue la taille du résultat de 1 bit sans perte de bits significatifs. Normalement la somme de trois nombres de L bits est au maximum un nombre de L+2 bits. Comme le module M n'est jamais choisi à la valeur maximale ($2^L$-1), et que X et Y sont, chacun, inférieurs à M, la somme ne dépasse pas L+1 bits, d'où il résulte que chaque itération fournit un nombre R de L bits.

La valeur R cherchée dans la relation (1) est fournie par la dernière itération.

Diverses autres méthodes itératives sont décrites dans [« Analyzing and Comparing Montgomery Multiplication Algorithms », Çetin Kaya Koç et al., IEEE Micro, 16(3): 26-33, June 1996].

Ces méthodes sont un point de départ pour mettre en oeuvre les calculs sur un microprocesseur, éventuellement assisté d'un accélérateur dédié à la multiplication de Montgomery.

Une difficulté rencontrée pour mettre un oeuvre ces calculs sur un microprocesseur résulte du fait que la taille des nombres est trop grande (par exemple 512 bits) par rapport à la capacité de calcul du microprocesseur (par exemple 64 bits). Il en résulte que chaque opération élémentaire est effectuée en accumulant des résultats partiels issus de la décomposition des grands nombres en tranches de taille adaptée à la capacité du microprocesseur. Une telle tranche sera appelée « chiffre » ci-après pour faire une analogie avec la multiplication de nombres décimaux.

Les brevets US6185596 et US7543011 proposent des circuits de multiplication de Montgomery tendant à optimiser le temps de calcul et la consommation de courant (en effet, les multiplications de Montgomery étant utilisées en cryptographie, notamment dans des cartes à puce sans contact, on cherche aussi à minimiser la consommation et, corrélativement, la taille).

**Résumé de l'invention**

Ainsi, il est souhaitable de minimiser le produit (temps de réponse) x taille d'un circuit de multiplication de Montgomery.

On tend à satisfaire ce besoin en prévoyant un procédé de multiplication modulaire de deux nombres X et Y de L bits à l'aide d'un circuit électronique dans un système à processeur, le résultat de la multiplication modulaire pouvant être définie à partir d'une valeur XY + mM, où M est le modulo, de L bits, et m un nombre de L bits trouvé tel que cette valeur soit divisible par $2^L$ procédé comprenant les étapes suivantes :

- faire une boucle principale de L/k itérations, où k est une taille de nombre exploitable par le processeur, une itération i de la boucle principale impliquant le calcul d'un terme $XY_i + m_iM + R$, où $Y_i$ et $m_i$ sont les chiffres de k bits de rang i des nombres Y et m en partant des poids faibles, et R le résultat de l'itération précédente ;

- dans chaque itération i :

  - faire une première sous-boucle de k/p itérations, avec 1 < p < k, organisée pour calculer un premier résultat partiel du terme $XY_i + m_iM + R$ sur les k bits de poids faible des nombres X, M et R, suivant une décomposition des nombres X et $m_i$ en chiffres de p bits ;

  - en début de chaque itération de la première sous-boucle, produire simultanément les p bits du chiffre courant du nombre $m_i$ par un circuit logique combinatoire ; et

  - à la fin de la première sous-boucle, faire une deuxième sous-boucle pour calculer et sommer les résultats partiels restants du terme $XY_i + m_iM + R$ en utilisant le nombre $m_i$ établi dans la première sous-boucle.

Selon un mode de mise en oeuvre du procédé, la deuxième sous-boucle calcule les résultats partiels restants du terme $XY_i + m_iM + R$ suivant une décomposition des nombres X, M et R en chiffres de p bits.

Selon un mode de mise en oeuvre du procédé, p est choisi pour qu'un multiplieur binaire d'un opérande de k bits par un opérande de p bits produise un résultat en moins de la moitié d'un cycle du processeur.

Selon un mode de mise en oeuvre, le procédé comprend les étapes suivantes :

- à chaque itération j de la première sous-boucle, pour j allant de 0 à k/p - 1, mettre à jour un registre (S) de k bits avec les k bits de poids fort de la somme du terme $X_{(j)}Y_i + m_{(j)}M_{[k-1:0]}$ et du contenu précédent du registre, où $X_{(j)}$ et $m_{(j)}$ sont les chiffres de p bits de rang j des nombres X et $m_i$ ;

- à chaque itération j de la deuxième sous-boucle, pour j allant de k/p à L/p,

  - mettre à jour le registre (S) avec les k bits de poids fort de la sortie d'un additionneur recevant les valeurs $X_{(j)}Y_i$, $m_iM_{(j)}$ et le contenu précédent du registre, où $M_{(j)}$ est le chiffre de p bits de rang j du nombre M ; et

  - produire un chiffre de p bits de rang j-k/p du résultat R courant par la somme des p bits de poids faible de la sortie de l'additionneur et du chiffre de p bits de rang j du résultat R précédent ;

- à la fin de la deuxième sous-boucle, produire les k bits de poids fort du résultat R courant par le contenu du registre.

On prévoit également un circuit de calcul d'une somme de produits, chaque produit ayant un opérande binaire de q bits et un opérande binaire de k bits, où k est un multiple de q, comprenant un additionneur à sauvegarde de retenue (CSA) à q entrées ; un multiplexeur par entrée de l'additionneur, ayant quatre voies de k bits recevant respectivement la valeur 0, un premier des opérandes de k bits, le deuxième opérande de k bits, et la somme des deux opérandes de k bits, la sortie d'un multiplexeur de rang t (t compris entre 0 et q-1) étant prise en compte par l'additionneur avec un décalage à gauche de t bits ; et chaque multiplexeur ayant des première et deuxième entrées de sélection de voie, les bits d'un premier des opérandes de q bits étant fournis respectivement aux premières entrées de sélection, et les bits du deuxième opérande de q bits étant fournis respectivement aux deuxièmes entrées de sélection.

Selon un mode de réalisation, l'additionneur à sauvegarde de retenue comprend deux entrées supplémentaires de k bits et fournit une sortie double sous forme de somme partielle et séquence de retenues, représentatifs d'un résultat de k+q bits, le circuit comprenant par ailleurs un registre de k bits connecté pour stocker les k bits de poids fort de la sortie de l'additionneur sous forme de somme partielle et séquence de retenues, le contenu du registre étant fourni aux deux entrées supplémentaires de l'additionneur ; une horloge connectée pour cadencer la mise à jour du registre ; et un circuit de commande connecté pour appliquer un nouveau couple d'opérandes de q bits aux entrées de sélection des multiplexeurs à chaque cycle d'horloge.

On peut prévoir un système à plusieurs circuits de calcul du type susmentionné connectés en chaîne, dans lequel chaque additionneur à sauvegarde de retenue comprend deux entrées supplémentaires et fournit une sortie double sous forme de somme partielle et séquence de retenues, représentatifs d'un résultat de k+q bits ; les k bits de poids fort de la sortie d'un additionneur de la chaîne, sous forme de somme partielle et séquence de retenues, sont fournis aux deux entrées supplémentaires de l'additionneur suivant de la chaîne ; les entrées de sélection du jeu de multiplexeurs de chaque additionneur reçoivent un couple différent d'opérandes de q bits ; un registre de k bits est connecté pour stocker les k bits de poids fort de la sortie du dernier additionneur de la chaîne sous forme de somme partielle et séquence de retenues, le contenu du registre étant fourni aux deux entrées supplémentaires du premier additionneur de la chaîne ; une horloge est connectée pour cadencer la mise à jour du registre ; et un circuit de commande est connecté pour appliquer un nouveau couple d'opérandes de q bits aux entrées de sélection de chaque jeu de multiplexeurs à chaque cycle d'horloge.

Selon un mode de réalisation, le système comprend un emplacement mémoire contenant un résultat en cours de calcul ; et un additionneur complet par additionneur à sauvegarde de retenue, recevant sur une première entrée les bits représentatifs des q bits de poids faible de la sortie de l'additionneur à sauvegarde de retenue, recevant sur une deuxième entrée q bits d'une première position de l'emplacement mémoire, et la sortie de l'additionneur complet produisant q bits écrits dans une deuxième position de l'emplacement mémoire.

Selon un mode de réalisation, le système comprend des registres connectés pour recevoir des opérandes d'une mémoire externe, la fréquence de ladite horloge étant choisie deux fois supérieure à la fréquence d'une horloge qui cadence les accès à la mémoire externe, ledit emplacement mémoire étant une mémoire interne.

Le système peut être appliqué au calcul du produit modulaire de deux nombres X et Y de L bits, le résultat de la multiplication modulaire pouvant être définie à partir d'une valeur $XY + mM$, où M est le modulo, de L bits, et m un nombre de L bits trouvé tel que cette valeur soit divisible par $2^L$, le circuit étant utilisé pour le calcul d'un terme intermédiaire $XY_i + m_iM + R$ par itérations au rythme d'une horloge, où $Y_i$ et $m_i$ sont les chiffres de k bits de rang i des nombres Y et m en partant des poids faibles, et R la somme des termes précédents. Le circuit a un premier mode où il reçoit comme opérandes de k bits le nombre $Y_i$ et les k premiers bits du nombre M, et comme opérandes de q bits, q bits du nombre X et q bits du nombre $m_i$. Le système comprend alors un circuit de commande agencé pour sélectionner comme opérandes de q bits, à chaque itération, un couple différent de paquets de q bits des nombres X et $m_i$ ; un circuit logique combinatoire fournissant à chaque itération le paquet courant de q bits du nombre $m_i$ ; un premier registre recevant en juxtaposition les paquets de q bits du nombre $m_i$ ; et un deuxième registre contenant une valeur de k bits représentative de l'itération précédente, fournie à deux entrées supplémentaires de l'additionneur à sauvegarde de retenue sous forme de somme partielle et séquence de retenues.

Selon un mode de réalisation, le circuit a un deuxième mode où il reçoit comme opérandes de k bits le nombre $Y_i$ et le nombre $m_i$ contenu dans le premier registre, et comme opérandes de q bits, q bits des nombres X et M, le circuit de commande étant agencé pour sélectionner comme opérandes de q bits, à chaque itération, un couple différent de paquets de q bits des nombres X et M.

## Description sommaire des dessins

Des modes de réalisation seront exposés dans la description suivante, faite à titre non limitatif en relation avec les figures jointes parmi lesquelles :

- les figures 1A et 1B représentent sous forme graphique deux sous-boucles d'un algorithme particulier de multiplication de Montgomery ;

- les figures 2A et 2B représentent un mode de réalisation de circuit de multiplication de Montgomery élémentaire dans des configurations aptes à mettre en oeuvre les sous-boucles des figures 1A et 1B, respectivement ;

- la figure 3 représente un mode de réalisation de circuit de multiplication de Montgomery réalisé par une mise en cascade de plusieurs circuits élémentaires du type des figures 2A et 2B ; et

- la figure 4 illustre un exemple de circuit logique combinatoire permettant de produire 4 bits du nombre m.

## Description d'un mode de réalisation préféré de l'invention

Afin d'accélérer le calcul d'une multiplication modulaire de deux nombres dont la taille excède la capacité de calcul du processeur, on cherche à améliorer l'efficacité de chaque calcul intermédiaire, et à organiser les calculs intermédiaires de manière que tous les cycles du processeur soient exploités.

La relation (1) est équivalente à :

$$R = 2^{-L}(XY + mM), \qquad (3)$$

où m est un nombre de L bits trouvé tel que les L bits de poids faible de la somme, codée sur 2L bits, soient nuls. En d'autres termes R correspond aux L bits de poids fort de la somme.

En développant les calculs itératifs de la relation (2), on obtient :

$$
\begin{aligned}
2^{L}R = \;& XY_{[0]} + m_{[0]}M \\
& + 2\,(XY_{[1]} + m_{[1]}M) \\
& + 2^{2}(XY_{[2]} + m_{[2]}M) \\
& + \ldots \\
& + 2^{L-1}(XY_{[L-1]} + m_{[L-1]}M), \qquad (4)
\end{aligned}
$$

et le nombre m de la relation (3) s'avère être : $m = (m_{[L-1]}, m_{[L-2]}, \ldots m_{[2]}, m_{[1]}, m_{[0]})$.

On peut récrire une version intermédiaire de cette relation pour qu'un des opérandes de chaque produit, qu'on pourra appeler « chiffre », soit de taille k supérieure au bit, mais restant dans les limites manipulables par un processeur :

$$
\begin{aligned}
2^{L}R = \;& XY_{0} + m_{0}M \\
& + 2^{k}(XY_{1} + m_{1}M) \\
& + 2^{2k}(XY_{2} + m_{2}M) \\
& + \ldots \\
& + 2^{(w-1)k}(XY_{w-1} + m_{w-1}M), \qquad (5)
\end{aligned}
$$

où w = L/k, et $Y_i$ et $m_i$ sont les chiffres de k bits de rang i des nombres Y et m. En d'autres termes $Y_i = Y_{[ki+k-1 \,:\, ki]}$ et $m_i = m_{[ki+k-1 \,:\, ki]}$.

Dans un exemple pratique, on peut avoir L = 512 et k = 64.

Cette décomposition est utilisable sous la forme algorithmique suivante :

$$
\begin{aligned}
& R := 0 \\
& \text{pour i allant de 0 à w-1 faire} \\
& \quad \text{trouver } m_i \text{ tel que } R + XY_i + m_iM \text{ soit divisible par } 2^{k} \\
& \quad R := 2^{-k}(R + XY_i + m_iM) \\
& \text{fin pour} \qquad\qquad\qquad\qquad\qquad\qquad (6)
\end{aligned}
$$

A chaque itération, on a une somme de deux produits. Chaque produit a un opérande de k bits, chiffre adapté à la capacité du processeur, et un opérande de L bits, trop grand pour le processeur. Par « capacité du processeur » on entend plutôt la taille du bus de données ou bus mémoire du processeur. Chaque produit est calculable par le processeur en faisant une somme de produits partiels, après une décomposition de l'opérande de L bits (X et M) en chiffres traitables par le processeur (k bits ou moins). Ainsi, dans chaque itération de l'algorithme (6), on procède à des sous-itérations pour calculer les produits partiels.

Une complication résulte du fait que le chiffre $m_i$ n'est pas connu d'avance car il dépend des valeurs X, Y et M. Les k bits successifs du chiffre $m_0$, pour la première itération, sont calculables par k itérations selon l'algorithme (2), itérations au bout desquelles on a aussi calculé le premier terme $XY_0 + m_0M$. En procédant ainsi, l'algorithme (6) n'apporterait aucune amélioration par rapport à l'algorithme (2) en termes de nombre d'itérations.

Pour diminuer le nombre d'itérations, on a proposé de calculer chaque chiffre $m_i$ à l'aide d'un circuit logique combinatoire. Cela entraîne qu'on peut produire k bits du résultat partiel R en une seule itération, k étant la taille des chiffres $m_i$. Par contre, la complexité du circuit logique combinatoire augmente avec $k^2$. En outre, le temps de réponse des multiplieurs binaires qui prennent le chiffre $m_i$ comme opérande augmente avec k. Il en résulte que le temps de réponse du circuit de calcul du résultat partiel peut dépasser le temps de cycle du processeur, entraînant des difficultés pour que tous les cycles d'horloge soient exploités.

On propose ici un compromis entre la taille du circuit de calcul de résultat partiel, sa latence, et la réduction du nombre d'itérations. Pour cela, la taille de l'un des opérandes des multiplieurs binaires est choisie à la capacité maximale du processeur, k, et la taille, p, de l'autre opérande est choisie inférieure à k, de préférence une puissance de 2, pour que le circuit de calcul de résultat partiel effectue le calcul en moins de temps qu'un cycle du processeur.

Pour que les données échangées sur le bus mémoire pour les besoins des calculs soient toujours de taille maximale, on considère que chaque opérande d'un produit partiel est de taille k, mais les calculs sont articulés pour que l'un ou l'autre opérande soit décomposé en sous-chiffres de p bits et on fait k/p itérations de produits partiels avec un opérande de k bits et un opérande de p bits, au lieu d'un seul produit avec deux opérandes de k bits. Cela permet notamment, dans une première phase, de décomposer chaque chiffre $m_i$ en sous-chiffres de p bits calculables par un circuit logique combinatoire de taille raisonnable. La taille p dépendra de la technologie de fabrication et de la fréquence d'horloge du processeur.

A titre d'exemple, on peut avoir p=16 et k=64.

En tenant compte de ces contraintes, l'inventeur est parvenu à écrire l'algorithme (6) sous la forme suivante :

$$R := 0 \text{ (L bits)}$$

$$\text{pour } i \text{ allant de } 0 \text{ à } w\text{-}1 \text{ faire}$$

$$\quad S := R_{[k-1:0]}$$

$$\quad \text{pour } j \text{ allant de } 0 \text{ à } k/p - 1 \text{ faire}$$

$$\quad\quad m_{i[pj+p-1\,:\,pj]} := f(Y_{[p-1:0]}, X_{[pj+p-1\,:\,pj]}, M_{[p-1:0]}, R_{[pj+p-1\,:\,pj]}, S_{[p-1:0]})$$

$$\quad\quad SUM := X_{[pj+p-1\,:\,pj]}Y_i + m_{i[pj+p-1\,:\,pj]}M_{[k-1:0]} + S$$

$$\quad\quad S := SUM_{[64+p-1\,:\,p]}$$

$$\quad \text{fin pour } j$$

$$\quad \text{pour } j \text{ allant de } k/p \text{ à } L/p$$

$$\quad\quad SUM := X_{[pj+p-1\,:\,pj]}Y_i + m_i M_{[pj+p-1\,:\,pj]} + S$$

$$\quad\quad R_{[p(j-k/p)+p-1\,:\,p(j-k/p)]} := SUM_{[p-1:0]} + R_{[pj+p-1\,:\,pj]}$$

$$\quad\quad S := SUM_{[64+p-1\,:\,p]}$$

$$\quad \text{fin pour } j$$

$$\quad R_{[L-1:L-k]} := S$$

$$\text{fin pour } i \hspace{6cm} (7)$$

Cet algorithme a en outre été articulé pour que les multiplications en jeu puissent être réalisées à l'aide seulement d'additionneurs, notamment des additionneurs à sauvegarde de retenue, couramment appelés CSA (du terme anglais « Carry-Save Adder »).

L'algorithme comporte une boucle principale d'indice i et w=L/k itérations, et deux sous-boucles successives d'indices j. R est un emplacement mémoire d'au moins L bits destiné à contenir le résultat de la multiplication modulaire à la fin de la boucle principale. SUM désigne la sortie, sur k+p bits, d'un additionneur utilisé à chaque itération des sous-boucles, et S est un registre recevant les k bits de poids fort de la sortie SUM

La première sous-boucle est organisée pour calculer un premier résultat partiel du terme $XY_i + m_iM + R$, à savoir $X_{[k-1:0]}Y_i + m_iM_{[k-1:0]} + R_{[k-1:0]}$, suffisant à calculer les k bits du chiffre $m_i$. En effet, quand on cherche un nombre $m_i$ de k bits tel que le produit $m_iM$ rende le terme divisible par $2^k$, les opérations nécessaires portent sur seulement les k bits de poids faible de chacun des opérandes intervenant dans le terme. Ces k bits du chiffre $m_i$ sont calculés en k/p itérations, chacune fournissant par calcul direct (à l'aide d'un circuit logique combinatoire) un sous-chiffre consécutif de p bits de $m_i$, qui est stocké dans un registre pour un usage dans la sous-boucle suivante. Pour les besoins de ces calculs, la sous-boucle balaye le chiffre $m_i$ et la valeur $X_{[k-1:0]}$ par chiffres de p bits.

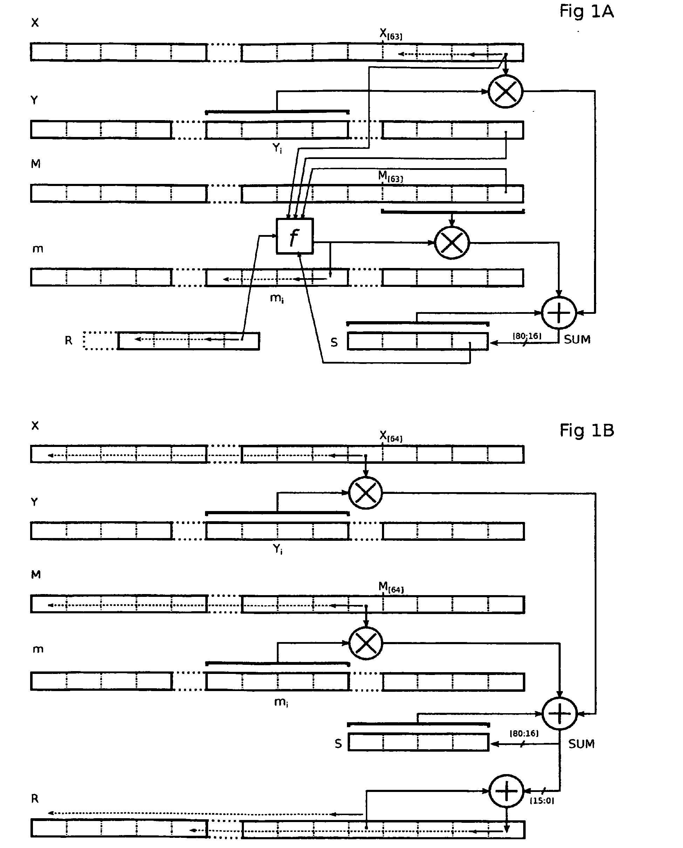

La figure 1A représente de manière graphique les itérations faites dans la première sous-boucle pour l'itération i de la boucle principale, avec k=64 et p=16. Les nombres sont représentés sous forme de registres divisés en blocs de 16 bits. L'état représenté correspond à celui de la première itération de la sous-boucle. Des flèches en trait plein vers la gauche désignent les chiffres de 16 bits utilisés à l'itération suivante. Des flèches en pointillés désignent les chiffres utilisés à la dernière itération.

Le registre S reçoit les k bits de poids fort de la sortie SUM de l'additionneur, les p bits restants étant tous nuls du fait du choix des p bits de $m_i$. Le registre S contient le premier résultat partiel à la fin de la sous-boucle, à considérer comme un nombre de 2k bits dont les k bits de poids faible sont tous nuls.

On désigne par *f* une fonction logique combinatoire qui produit p bits consécutifs du chiffre $m_i$ en fonction de cinq paramètres, X, Y, M, S et R (où R est le contenu courant de l'emplacement mémoire de même nom). Il s'avère que la fonction f n'a besoin que de p bits de chacun de ces paramètres, pour les mêmes raisons que le chiffre $m_i$ n'a besoin que de k bits de chacun des opérateurs. Un exemple de circuit mettant en oeuvre cette fonction est décrit ultérieurement.

La deuxième sous-boucle d'indice j sert à poursuivre le calcul du terme $XY_i + m_iM + R$ par calculs partiels à l'aide du chiffre $m_i$ calculé dans la première sous-boucle. Les nombres M et X sont ici décomposés en chiffres de p bits. Le balayage de M et X pour former les résultats partiels démarre de la position suivant immédiatement celle atteinte par la première sous-boucle, et le premier calcul tient compte du premier résultat partiel contenu dans le registre S à la sortie de la première sous-boucle.

La figure 1B représente de manière graphique les itérations faites dans la deuxième sous-boucle pour l'itération i de la boucle principale, avec k=64 et p=16. L'état représenté correspond à celui de la première itération de la sous-boucle. Comme pour la figure 1A, des flèches en trait plein vers la gauche désignent les chiffres de 16 bits utilisés à l'itération suivante. Des flèches en pointillés désignent les chiffres utilisés à la dernière itération.

Comme dans la première sous-boucle, les k bits de poids fort de l'additionneur SUM sont écrits dans le registre S. Par contre, comme on utilise cette fois des nombres $m_i$ qui ont été calculés sans corrélation avec la sous-boucle en cours, les p bits de poids faible de la valeur SUM ne sont pas forcément nuls. En fait, ces p bits de poids faible servent à reconstituer le résultat R courant par chiffres de p bits à l'aide d'un calcul très simple : la somme des p bits de poids faible de la valeur SUM et de p bits du résultat R précédent.

Il s'avère qu'à la fin de la deuxième sous-boucle, on aura produit les L-k bits de poids faible du résultat R. Les k bits de poids fort manquants sont alors pris dans le registre S.

L'algorithme (7) a été conçu, notamment par le choix de p, pour que chaque itération de la deuxième sous-boucle puisse être réalisée en moins d'un cycle d'horloge du processeur, comme on le verra plus tard en relation avec un circuit pour mettre en oeuvre cet algorithme.

Les algorithmes de calcul de multiplications modulaires impliquent de nombreux accès aux emplacements mémoire contenant le résultat R en cours de calcul et les nombres X, Y et M. Compte tenu de la taille de ces nombres, ils sont classiquement stockés dans une mémoire RAM. Il en résulte que de nombreux cycles sont utilisés pour les lectures et les écritures en mémoire RAM

On constate que dans chaque itération de la boucle principale de l'algorithme (7), c'est-à-dire pour un indice i donné, deux opérandes de k=64 bits restent constants ($m_i$ et $Y_i$). L'opérande $m_i$ est calculé en interne au fur et à mesure des besoins, et n'est pas écrit en mémoire. L'opérande $Y_i$ est utilisé dans une seule itération de la boucle principale, d'où il résulte qu'on ne doit le lire qu'une fois pour l'ensemble du calcul.

Les nombres X et M sont parcourus en totalité par chiffres de 16 bits à chaque itération de la boucle principale. En d'autres termes, chacun de ces nombres est lu L/k fois sur la totalité du calcul.

Quant au résultat R en cours de calcul, à chaque itération i de la boucle principale, on lit la totalité du résultat R calculé à l'itération i-1, et on récrit une nouvelle valeur. Cela correspond à L/k lectures et écritures de R sur la totalité du calcul.

Afin de diminuer le nombre des accès mémoire, on pourrait envisager de stocker les nombres X, M et R dans une mémoire cache interne au processeur. Or cela augmenterait trop la taille du processeur pour de nombreuses applications envisagées de la multiplication modulaire, notamment les cartes à puce, où on souhaite un circuit intégré de petite taille.

On a trouvé un bon compromis en ne stockant que le résultat R dans une mémoire interne au processeur. En effet, on accède à ce résultat R en lecture et en écriture, alors que les accès aux nombres X et M ne sont qu'en lecture.

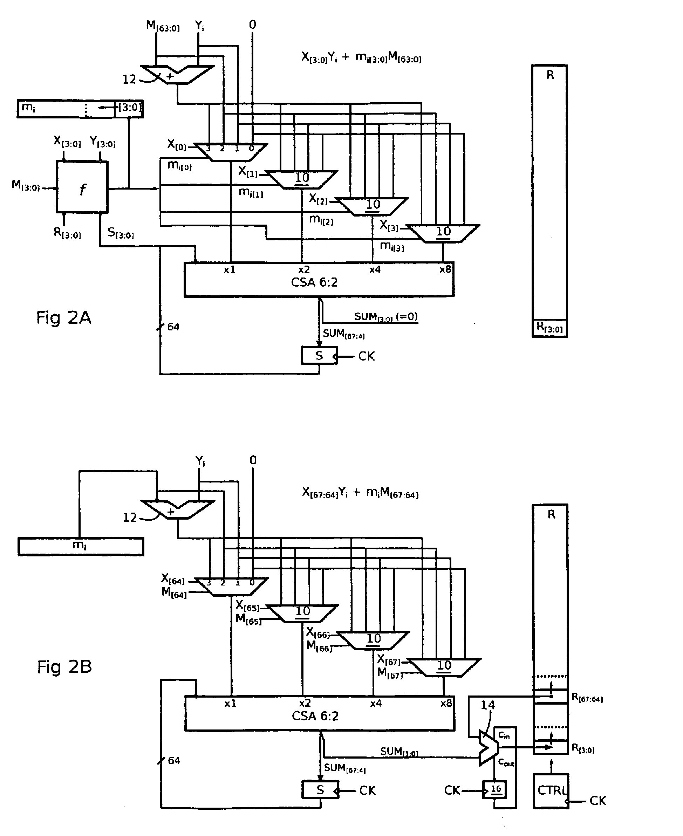

La figure 2A représente de manière schématique un circuit de multiplication modulaire optimisé dans une configuration permettant de mettre en oeuvre la première sous-boucle de l'algorithme (7), avec k=64 et p=4. L'état des entrées et sorties du circuit est celui correspondant à la première itération de la sous-boucle et à la figure 1A ; il calcule la somme $X_{[3:0]}Y_i + mi_{[3:0]}M_{[63:0]} + S$.

La somme de produits $X_{[3:0]}Y_i + m_{i[3:0]}M_{[63:0]}$ est calculée sans utiliser de multiplieur. Pour cela, on prévoit une structure bâtie autour d'un additionneur à sauvegarde de retenue CSA à 6 entrées et deux sorties (6:2). Les entrées sont définies sur 64 bits. Les deux sorties correspondent à la somme partielle ps sur 64 bits, et à une séquence de retenues cs sur 67 bits. Afin de faciliter la compréhension du fonctionnement des circuits décrits ci-après, et de permettre un rapprochement avec les figures 1A et 1B, on a représenté les deux sorties de l'additionneur, c'est-à-dire la somme partielle ps et la séquence de retenues cs, par le résultat SUM qu'elles représentent, sous la forme d'une seule liaison.

Pour retrouver le résultat final d'un tel additionneur, on effectue une somme complète ps + 2cs, ce qui produit un résultat sur 69 bits, dont un bit de retenue supplémentaire. En effet, la somme de 6 nombres de 64 bits nécessite en théorie 6-1=5 bits de plus pour coder le résultat. Compte tenu des propriétés des nombres utilisés, notamment du fait que X et Y sont inférieurs à M, 68 bits suffisent pour coder le résultat.

En réalité, la somme complète ps + 2cs n'est jamais calculée sur l'ensemble des 68 bits dans le circuit, ce qui représente un gain sensible en temps de réponse. Une telle somme est, où cela est requis, calculée sur seulement p=4 bits.

Les 64 bits de poids fort de la sortie SUM de l'additionneur CSA sont écrits dans le registre S. Ce registre S est cadencé par une horloge CK qui détermine l'enchaînement des itérations. La sortie du registre S est réinjectée dans l'additionneur CSA. Cela prend deux des entrées de l'additionneur, puisque le contenu du registre S est en réalité au même format que la sortie de l'additionneur, sous forme de somme partielle ps et séquence de retenues cs ; plus précisément $ps_{[63:4]}$ et $cs_{[67:3]}$ pour correspondre aux 64 bits de poids fort de la somme SUM. Cela correspond à la configuration de l'additionneur et du registre S représentée à la figure 1A. Les quatre bits de poids faible de la somme SUM sont tous nuls dans cette configuration, puisque les quatre bits de $m_i$ sont calculés pour obtenir ce résultat.

Les multiplications sont faites à l'aide de quatre multiplexeurs 10 à quatre voies de 64 bits, chacun relié à l'une des entrées restantes de l'additionneur CSA. Les quatre multiplexeurs reçoivent les mêmes entrées : la sortie d'un additionneur 12 sur une entrée 3, le nombre $M_{[63:0]}$ sur une entrée 2, le nombre $Y_i$ sur une entrée 1, et 0 sur une entrée 0. L'additionneur 12 reçoit $M_{[63:0]}$ et $Y_i$.

Un multiplexeur 10 de rang t (t compris entre 0 et 3) est commandé par un paire de bits ($mi_{[4j+t]}$, $X_{[4j+t]}$) qui code le numéro de l'entrée à sélectionner, où j est l'itération de la première sous-boucle de l'algorithme (7) (la figure 2A correspond à l'itération j=0). En outre, la sortie du multiplexeur de rang t est prise en compte avec un décalage à gauche de t bits par l'additionneur CSA. En d'autres termes, la sortie du multiplexeur de rang t est multipliée par $2^t$.

Ainsi, par exemple, si $m_{i[3:0]} = 0000$ et $X_{[3:0]} = 0000$, les quatre multiplexeurs sélectionnent tous la valeur 0. L'additionneur CSA produit une valeur nulle pour la somme de produits.

Si $m_{i[3:0]} = 1111$ et $X_{[3:0]} = 1111$, les quatre multiplexeurs sélectionnent tous la valeur $Y_i + M_{[63:0]}$. L'additionneur produit $(1+2+4+8)(Y_i + M_{[63:0]})$, c'est-à-dire la valeur escomptée de $15M_{[63:0]} + 15Y_i$.

Si $m_{i[3:0]} = 1111$ et $X_{[3:0]} = 0000$, les quatre multiplexeurs sélectionnent tous la valeur $M_{[63:0]}$. L'additionneur produit $(1+2+4+8)M_{[63:0]} = 15M_{[63:0]}$.

Si $m_{i[3:0]} = 0000$ et $X_{[3:0]} = 1111$, les quatre multiplexeurs sélectionnent tous la valeur $Y_i$. L'additionneur produit $(1+2+4+8)Y_i = 15Y_i$.

Si $m_{i[3:0]} = 1100$ et $X_{[3:0]} = 0011$, les deux premiers multiplexeurs sélectionnent la valeur $Y_i$ et les deux autres multiplexeurs la valeur $M_{[63:0]}$. L'additionneur produit $(1+2)Y_i + (4+8)M_{[63:0]} = 3Y_i + 12M_{[63:0]}$.

On peut vérifier que toutes les combinaisons produites ainsi par les multiplexeurs produisent en sortie de l'additionneur CSA les valeurs de la somme de produits à calculer.

Les bits $m_{i[4j]}$ à $m_{i[4j+3]}$ sont calculés simultanément par un circuit logique combinatoire f recevant les quadruplets $Y_{[3:0]}$, $X_{[4j+3:4j]}$, $M_{[3:0]}$, $R_{[4j+3:4j]}$, et $S_{[3:0]}$.

Les quatre bits $S_{[3:0]}$ sont les quatre bits de poids faible de la valeur représentée par le registre S, soit la valeur $SUM_{[7:4]}$ de l'itération précédente, ou, pour être plus précis, le couple de valeurs $ps_{[7:4]}$ et $cs_{[6:3]}$ fournis par l'additionneur CSA à l'itération précédente.

Les quatre bits $R_{[4j+3:4j]}$ sont prélevés dans une mémoire R de L bits, qui, comme on l'a évoqué précédemment est intégrée au processeur, et dont l'utilisation sera décrite en relation avec la figure 2B.

Les 4 bits fournis par le circuit f sont empilés dans un registre $m_i$. Au bout de 16 coups de l'horloge CK, on aura écrit dans le registre $m_i$ les 64 bits du nombre $m_i$ à calculer. On passe alors à la deuxième sous-boucle de l'algorithme, mis en oeuvre par le circuit de la figure 2B.

A la figure 2B, on retrouve la structure de la figure 2A, dans laquelle deux des opérandes ont changé. L'état des entrées et sorties du circuit est celui correspondant à la figure 1B, à la première itération de la deuxième sous-boucle ; le circuit calcule la somme $X_{[67:64]}Y_i + m_iM_{[67:64]} + S$. La première entrée de l'additionneur 12 et les entrées de rang 2 des multiplexeurs 10 reçoivent la valeur $m_i$ de 64 bits stockée dans le registre de même nom. Le paire de bits de sélection pour un multiplexeur de rang t est ($M_{[4j+t]}$, $X_{[4j+t]}$), où j est l'indice d'itération de la deuxième sous-boucle, qui démarre à la valeur 16 dans cet exemple.

La valeur $m_i$ ayant été calculée et stockée, on n'utilise plus le circuit f de la figure 2A. Par contre, on cherche maintenant à mettre à jour la mémoire R. Cela est fait avec un additionneur 14 qui reçoit les 4 bits de poids faible de la sortie SUM de l'additionneur CSA et les quatre bits de rangs 64 à 67 (pour la première itération) de la mémoire R. En considérant la sortie de l'additionneur sous forme de somme partielle ps et séquence de retenues cs, les quatre bits de poids faible de la sortie SUM correspondent aux valeurs $ps_{[3:0]}$ et $2cs_{[2:0]}$ qui sont sommées par l'additionneur 14. Les quatre bits de sortie de l'additionneur 14 sont écrits aux rangs 0 à 3 (pour la première itération) dans la mémoire R. La retenue $c_{out}$ de la somme est stockée dans une bascule 16 cadencée par l'horloge CK. Le contenu de cette bascule alimente l'entrée de retenue $c_{in}$ de l'additionneur 14 pour la prochaine itération.

A chaque itération ou coup d'horloge CK, un circuit de commande CTRL décale de quatre bits vers les poids forts les emplacements de la mémoire R servant d'entrée et sortie à l'additionneur 14. Le circuit de commande organise en outre la sélection des paires de bits à appliquer aux entrées de sélection des multiplexeurs 10 à chaque coup d'horloge, ce qui est d'ailleurs fait aussi dans la configuration de la figure 2A.

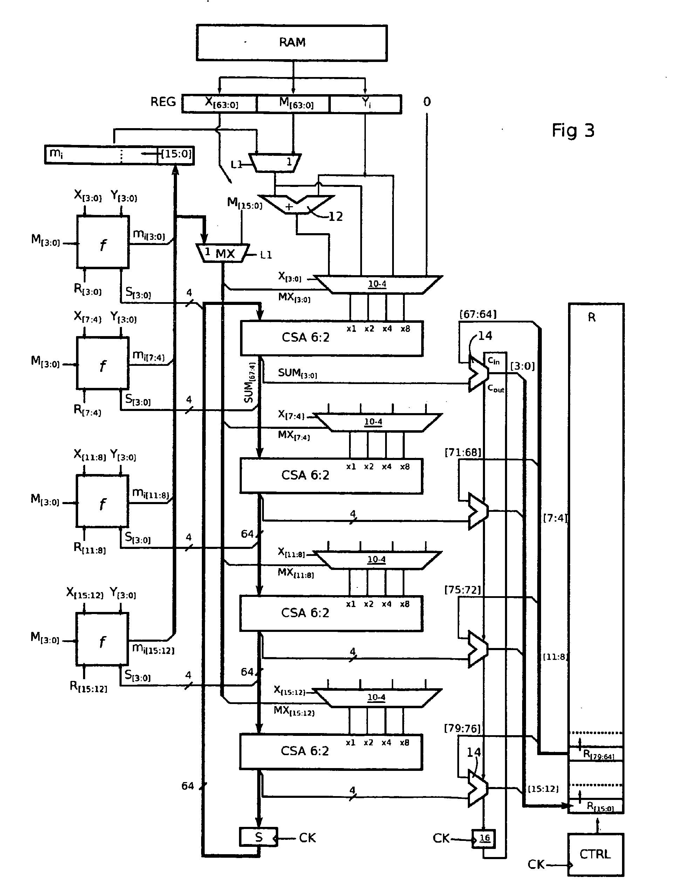

La figure 3 représente un circuit permettant de calculer le nombre $m_i$ et mettre à jour la mémoire R par paquets de 16 bits par coup d'horloge. Il est réalisé en connectant en cascade quatre circuits du type des figures 2A et 2B. Il comprend quatre additionneurs CSA dont chacun est associé à quatre multiplexeurs 10 (qui sont représentés groupés avec la référence 10-4) recevant les mêmes entrées, à un additionneur 14, et à un circuit $f$ de calcul combinatoire de 4 bits correspondants du nombre $m_i$. Chaque additionneur CSA reçoit les 64 bits de poids fort de la sortie de l'additionneur précédent. Le premier additionneur reçoit les 64 bits de poids fort de la sortie du dernier additionneur par l'intermédiaire du registre S.

Les multiplexeurs 10-4 sont commandés par des quadruplets successifs respectifs des nombres $m_i$ ou M, et X. Le choix du nombre $m_i$ ou M pour commander les multiplexeurs est opéré par un multiplexeur à deux voies de 16 bits MX en fonction d'un signal L1 indiquant par un « 1 » que le circuit opère dans la première sous-boucle, et par un « 0 » que le circuit opère dans la deuxième sous-boucle. Ce multiplexeur MX reçoit sur une première voie, sélectionnée lorsque L1=1, les 16 bits du nombre $m_i$, produits en parallèle par les circuits f, et sur une deuxième voie les 16 bits correspondants du nombre M.

Un multiplexeur 18 à deux voies de 64 bits fournit à l'additionneur 12 les 64 bits de poids faible du nombre M lorsque L1=1, et le nombre $m_i$ de 64 bits contenu dans le registre de même nom lorsque L1=0.

Les chiffres de travail des nombres X, Y et M sont stockés dans des registres internes REG de 64 bits, dont le contenu est renouvelé par un bus de 64 bits à partir d'une mémoire RAM externe au fur et à mesure des besoins. Les valeurs représentées, à savoir $X_{[63:0]}$, $Y_i$ et $M_{[63:0]}$, sont celles utilisées par les quatre itérations de la première sous-boucle pour une itération i de la boucle principale.

Dès la première itération de la deuxième sous-boucle, démarrant avec un indice j=4, on conserve la valeur $Y_i$, mais on charge les 64 bits suivants des nombres X et M, à savoir $X_{[127:64]}$ et $M_{[127:64]}$, qui seront utilisés sur 4 itérations de la deuxième sous-boucle.

Chacun des additionneurs 14 fournit un quadruplet respectif d'un paquet de 16 bits nouvellement calculé du nombre R, et reçoit pour cela un quadruplet respectif d'un ancien paquet de 16 bits contenu de la mémoire R. Les additionneurs 14 sont chaînés par leurs entrées et sorties de retenue. La sortie de retenue du dernier additionneur 14 est stockée dans la bascule 16, dont le contenu est fourni à l'entrée de retenue du premier additionneur 14.

Lors des itérations de la première sous-boucle, la mise à jour de la mémoire R est désactivée. Les quatre bits de poids faible de la sortie des additionneurs CSA étant nuls pendant cette phase, les additionneurs 14 ne fournissent pas de résultats utiles. Le résultat intermédiaire servant à la suite des calculs se trouve dans le registre S et propagé par les additionneurs CSA.

A la première itération de la deuxième sous-boucle, les quatre additionneurs 14 produisent la valeur $R_{[15:0]}$ qui est écrite dans l'emplacement de 16 bits de rang 0 de la mémoire R. Cette valeur est calculée par les additionneurs 14 à partir du contenu lu à l'emplacement de rang 4 de la mémoire, à savoir la valeur $R_{[79:64]}$ précédente.

A l'itération suivante, le pointeur PTR décale les emplacements de lecture et d'écriture de la mémoire R de 16 bits vers les poids forts, comme cela est indiqué par des flèches.

Comme on l'a indiqué précédemment, à la dernière itération, il manque les 64 bits de poids fort du résultat dans la mémoire R. Ces 64 bits sont prélevés dans le registre S. Pour cela, on effectue ici, une seule fois par itération de la boucle principale, une conversion sur 64 bits du format CSA en binaire (ps + 2cs).

Ainsi, un circuit du type de la figure 3, après 4 cycles d'initialisation pour calculer les 64 bits du nombre $m_i$, produit 16 bits du résultat R par cycle, et cela à partir de 16 bits correspondants de chacun des nombres X, $Y_i$ et M. En d'autres termes, on ne peut pas charger de nouvelles valeurs dans les registres REG tant que 64 bits du résultat R n'ont pas été produits. Il faut 4 cycles pour produire les 64 bits du résultat R, alors que deux cycles suffisent pour renouveler les contenus requis des registres. En effet, avec les choix algorithmiques effectués ici pour décomposer les opérations, et le fait de stocker R dans une mémoire interne, il suffit de renouveler les paquets de X et de M, la valeur $Y_i$ restant constante pour toutes les itérations des deux sous-boucles. Il en résulte une exploitation de seulement 50 % de la bande passante du bus mémoire.

On souhaiterait donc produire 32 bits du résultat R par cycle de lecture de la mémoire RAM. On pourrait envisager pour cela d'étendre la capacité du circuit de la figure 3 à 32 bits par cycle en doublant le nombre d'étages.

Cela doublerait la surface occupée d'un circuit déjà complexe. En outre, le temps de réponse du circuit, croissant plus vite que la surface, risquerait de dépasser un cycle d'horloge, auquel cas cela réintroduirait le problème.

En fait, les choix représentés à la figure 3 sont le résultat d'un bon compromis taille-vitesse et consommation-vitesse. Dans les applications envisagées, notamment les cartes à puce sans contact fonctionnant avec une horloge de l'ordre de la dizaine de MHz, le circuit produit son calcul en moins de la moitié d'un cycle d'horloge.

On propose de doubler la fréquence de fonctionnement du circuit par rapport la fréquence de l'horloge du bus mémoire. En d'autres termes, l'horloge CK indiquée dans la figure 3 a une fréquence double de celle, qu'on désignera $CK_{RAM}$, cadençant les transferts avec la mémoire RAM. Dans ce cas, le circuit produit deux paquets successifs de 16 bits, c'est-à-dire 32 bits, en un cycle mémoire, de sorte qu'on parvient à occuper tous les cycles mémoire.

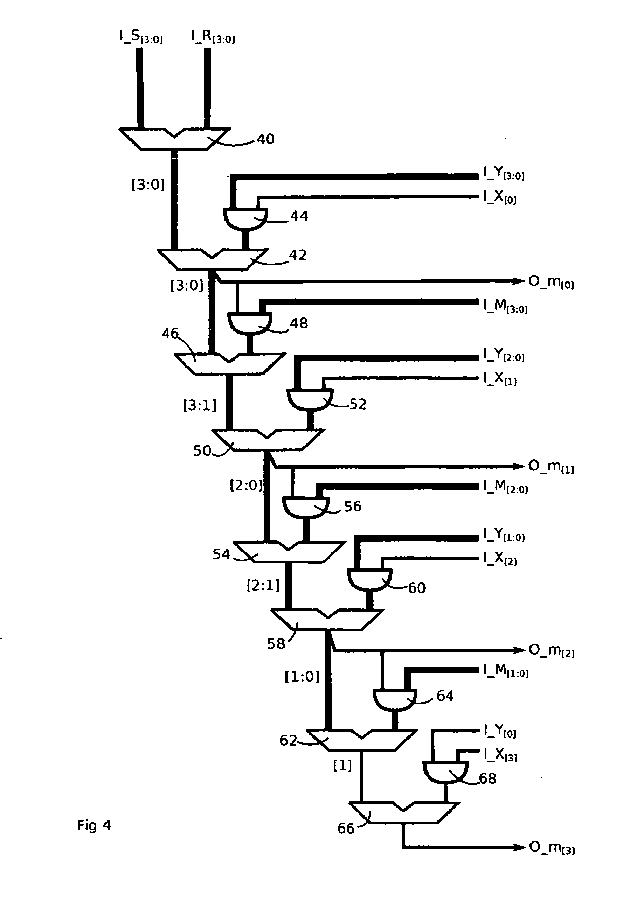

La figure 4 représente schématiquement un exemple détaillé de circuit circuit *f*. Les entrées de quatre bits correspondant aux paramètres X, Y, M, R et S sont désignées respectivement par 1_X, 1_Y, 1_M, 1_R, et I_S. La sortie produisant les quatre bits requis du nombre m est désignée O_m.

Le circuit comprend un additionneur complet 40 de 4 bits recevant les quatre bits de chacune des entrées I_S et I_R. Les quatre bits de sortie de cet additionneur (on ne tient pas compte de la retenue) sont fournis à une première entrée d'un additionneur 42. Une deuxième entrée de l'additionneur 42 reçoit le produit de chacun des bits de l'entrée 1_Y par le bit $I\_X_{[0]}$. Ce produit est obtenu par 4 portes ET que l'on a représentées groupées en une seule porte. Le premier bit de la sortie O_m est le bit de poids faible de la sortie de l'additionneur 42.

Les quatre bits de sortie de l'additionneur 42 (on ignore le bit de retenue) sont fournis à une première entrée d'un additionneur 46. Une deuxième entrée de l'additionneur 46 reçoit le produit de chacun des bits de l'entrée I_M par le bit $O\_m_{[0]}$, opéré par un groupe 48 de quatre portes ET.

Les trois bits de poids fort de la sortie de l'additionneur 46 sont fournis à une première entrée d'un additionneur 3 bits 50. Une deuxième entrée de l'additionneur 50 reçoit le produit des trois bits de poids faible de l'entrée 1_Y par le bit $I\_X_{[1]}$, opéré par un groupe 52 de trois portes ET. Le deuxième bit de la sortie O_m est le bit de poids faible de la sortie de l'additionneur 50.

Les trois bits de sortie de l'additionneur 50 (on ignore le bit de retenue) sont fournis à une première entrée d'un additionneur 3 bits 54. Une deuxième entrée de l'additionneur 54 reçoit le produit des trois bits de poids faible de l'entrée I_M par le bit $O\_m_{[1]}$, opéré par un groupe 56 de trois portes ET.

Les deux bits de poids fort de la sortie de l'additionneur 54 sont fournis à une première entrée d'un additionneur 2 bits 58. Une deuxième entrée de l'additionneur 58 reçoit le produit des deux bits de poids faible de l'entrée I_Y par le bit $I\_X_{[2]}$, opéré par un groupe 60 de trois portes ET. Le troisième bit de la sortie O_m est le bit de poids faible de la sortie de l'additionneur 58.

Les deux bits de sortie de l'additionneur 58 (on ignore le bit de retenue) sont fournis à une première entrée d'un additionneur deux bits 62. Une deuxième entrée de l'additionneur 62 reçoit le produit des deux bits de poids faible de l'entrée I_M par le bit $O\_m_{[2]}$, opéré par un groupe 64 de deux portes ET.

Le bit de poids fort de la sortie de l'additionneur 62 est fourni à une première entrée d'un additionneur 1 bit 66. Une deuxième entrée de l'additionneur 66 reçoit le produit du bit de poids faible de l'entrée I_Y par le bit $I\_X_{[3]}$, opéré par une porte ET 68. Le quatrième et dernier bit de la sortie O_m est le bit sortant de l'additionneur 58.

De nombreuses variantes et modifications des modes de réalisation décrits ici apparaîtront à l'homme du métier. Par exemple, la structure du circuit de calcul de somme de produits des figures 2A et 2B, à base d'un additionneur CSA et de multiplexeurs, peut être généralisée pour utiliser des opérandes de q bits au lieu de 4 bits pour commander les multiplexeurs. On prévoit alors q multiplexeurs, recevant tous les mêmes quatre entrées que celles décrites en relation avec la figure 2A ou 2B, et dont les sorties alimentent un additionneur CSA à q+2 entrées. La sortie du multiplexeur de rang t (t compris entre 0 et q-1) est prise en compte avec un décalage à gauche de t bits par l'additionneur CSA.

De préférence, q est un multiple de 4. En prenant q=8, par exemple, le circuit de la figure 3 a seulement deux étages dont chacun est associé à un circuit f produisant 8 bits du nombre $m_i$, et à un additionneur 14 produisant 8 bits du nombre R.

**Revendications**

1. Procédé de multiplication modulaire de deux nombres X et Y de L bits à l'aide d'un circuit électronique dans un système à processeur, le résultat de la multiplication modulaire pouvant être définie à partir d'une valeur XY + mM, où M est le modulo, de L bits, et m un nombre de L bits trouvé tel que cette valeur soit divisible par $2^L$, procédé comprenant l'étapede :

   • faire une boucle principale de L/k itérations, où k est une taille de nombre exploitable par le processeur, une itération i de la boucle principale impliquant le calcul d'un terme $XY_i + m_iM + R$, où $Y_i$ et $m_i$ sont les chiffres de k bits de rang i des nombres Y et m en partant des poids faibles, et R le résultat de l'itération précédente ;

**caractérisé en ce qu'**il comprend, dans chaque itération i, les étapes suivantes :

- faire une première sous-boucle de k/p itérations, avec 1 < p < k, organisée pour calculer un premier résultat partiel du terme $XY_i + m_iM + R$ sur les k bits de poids faible des nombres X, M et R, suivant une décomposition des nombres X et $m_i$ en chiffres de p bits ;
- en début de chaque itération de la première sous-boucle, produire simultanément les p bits du chiffre courant du nombre $m_i$ par un circuit logique combinatoire ; et
- à la fin de la première sous-boucle, faire une deuxième sous-boucle pour calculer et sommer les résultats partiels restants du terme $XY_i + m_iM + R$ en utilisant le nombre $m_i$ établi dans la première sous-boucle.

**2.** Procédé selon la revendication 1, dans lequel la deuxième sous-boucle calcule les résultats partiels restants du terme $XY_i + m_iM + R$ suivant une décomposition des nombres X, M et R en chiffres de p bits.

**3.** Procédé selon la revendication 1, dans lequel p est choisi pour qu'un multiplieur binaire d'un opérande de k bits par un opérande de p bits produise un résultat en moins de la moitié d'un cycle du processeur.

**4.** Procédé selon la revendication 2, comprenant les étapes suivantes :

• à chaque itération j de la première sous-boucle, pour j allant de 0 à k/p - 1, mettre à jour un registre (S) de k bits avec les k bits de poids fort de la somme du terme $X_{(j)}Y_i + m_{(j)}M_{[k-l:0]}$ et du contenu précédent du registre, où $X_{(j)}$ et $m_{(j)}$ sont les chiffres de p bits de rang j des nombres X et $m_i$ ;
• à chaque itération j de la deuxième sous-boucle, pour j allant de k/p à L/p,

- mettre à jour le registre (S) avec les k bits de poids fort de la sortie d'un additionneur recevant les valeurs $X_{(j)}Y_i$, $m_iM_{(j)}$ et le contenu précédent du registre, où $M_{(j)}$ est le chiffre de p bits de rang j du nombre M ; et
- produire un chiffre de p bits de rang j-k/p du résultat R courant par la somme des p bits de poids faible de la sortie de l'additionneur et du chiffre de p bits de rang j du résultat R précédent ;

• à la fin de la deuxième sous-boucle, produire les k bits de poids fort du résultat R courant par le contenu du registre.

**5.** Procédé selon la revendication 1, dans lequel k=64 et p=16.

**Patentansprüche**

**1.** Verfahren zur modularen Multiplikation zweier L-Bit-Zahlen X und Y mit Hilfe einer elektronischen Schaltung in einem Prozessorsystem, wobei das Ergebnis der modularen Multiplikation ausgehend von einem Wert XY + mM definiert werden kann, wobei M der Modulo von L Bits ist, und m eine gefundene Zahl von L Bits ist, so dass dieser Wert durch $2^L$ dividierbar ist, Verfahren umfassend den Schritt, der darin besteht:

• eine Hauptschleife aus L/k Iterationen zu bilden, wobei k eine prozessorkompatible Zahlengröße ist, wobei eine Iteration i der Hauptschleife die Berechung eines Terms $XY_i + m_iM + R$ impliziert, wobei $Y_i$ und $m_i$ die Ziffern von k Bits des Rangs i der Zahlen Y und m, ausgehend von den niedrigstwertigen Bits, sind und R das Ergebnis der vorhergehenden Iteration ist,
**dadurch gekennzeichnet, dass** es in jeder Iteration i die folgenden Schritte umfasst, die darin bestehen:

- eine erste Nebenschleife aus k/p Iterationen zu bilden, mit 1 < p < k, die organisiert ist, um nach einer Zerlegung der Zahlen X und $m_i$ in p-Bit-Ziffern ein erstes Teilergebnis des Terms $XY_i + m_iM + R$ ausgehend von den k niedrigstwertigen Bits der Zahlen X, M und R zu berechnen,
- zu Beginn jeder Iteration der ersten Nebenschleife gleichzeitig die p Bits der laufenden Ziffer der Zahl $m_i$ durch eine kombinatorische Logikschaltung zu erzeugen, und
- am Ende der ersten Nebenschleife eine zweite Nebenschleife zu bilden, um die verbleibenden Teilergebnisse des Terms $XY_i + m_iM + R$ unter Verwendung der in der ersten Nebenschleife erstellten Zahl $m_i$ zu berechnen und zu summieren.

**2.** Verfahren nach Anspruch 1, in dem die zweite Nebenschleife die verbleibenden Teilergebnisse des Terms $XY_i + m_iM + R$ nach einer Zerlegung der Zahlen X, M und R in p-Bit-Ziffern berechnet.

**3.** Verfahren nach Anspruch 1, in dem p gewählt wird, damit ein binärer Multiplikator eines k-Bit-Operanden mit einem p-Bit-Operand binnen weniger als einem halben Zyklus des Prozessors ein Ergebnis erzeugt.

**4.** Verfahren nach Anspruch 2, umfassend die folgenden Schritte, die darin bestehen:

- bei jeder Iteration j der ersten Nebenschleife für j von 0 bis k/p - 1 ein k-Bit-Register (S) mit den k höchstwertigen Bits der Summe des Terms $X_{(j)}Y_i + m_{(j)}M_{[k-1:0]}$ und des vorhergehenden Registerinhalts zu aktualisieren, wobei $X_{(j)}$ und $m_{(j)}$ die Ziffern von p Bits des Rangs j der Zahlen X und $m_i$ sind,
- bei jeder Iteration j der zweiten Nebenschleife für j von k/p bis L/p,

  - das Register (S) mit den k höchstwertigen Bits des Ausgangs eines Addierers, der die Werte $X_{(j)}Y_i$, $m_iM_{(j)}$ und den vorhergehenden Registerinhalt empfängt, zu aktualisieren, wobei $M_{(j)}$ die Ziffer von p Bits des Rangs j der Zahl M ist, und
  - eine Ziffer von p Bits des Rangs j-k/p des laufenden Ergebnisses R durch die Summe der p niedrigstwertigen Bits des Addiererausgangs und der Ziffer von p Bits des Rangs j des vorhergehenden Ergebnisses R zu erzeugen,

- am Ende der zweiten Nebenschleife, die k höchstwertigen Bits des laufenden Ergebnisses R mit dem Registerinhalt zu erzeugen.

**5.** Verfahren nach Anspruch 1, in dem k=64 und p=16.

## Claims

**1.** A method of modular multiplication of two L-bit numbers X an Y by means of an electronic circuit in a processor system, wherein the result of the modular multiplication may be defined from a value XY + mM, where M is the modulo, of L bits, and m is an L-bit number found such that this value is divisible by $2^L$, the method comprising:

- doing a main loop of L/k iterations, where k is a number size usable by the processor, an iteration i of the main loop involving the calculation of a term $XY_i + m_iM + R$, where $Y_i$ and $m_i$ are the k-bit digits of rank i of the numbers Y and m starting from the least significant bits, and R is the result of the previous iteration; **characterized in that**, in each iteration i, the method comprises:

  - doing a first sub-loop of k/p iterations, where 1 < p < k, organized to calculate a first partial result of the term $XY_i + m_iM + R$ on the k least significant bits of the numbers X, M and R, following a decomposition of numbers X and $m_i$ into p-bit digits;
  - at the beginning of each iteration of the first sub-loop, simultaneously producing the p bits of the current digit of number $m_i$ by a combinatory logic circuit; and
  - at the end of the first sub-loop, doing a second sub-loop to calculate and add the remaining partial results of term $XY_i + m_iM + R$ using the number $m_i$ established in the first sub-loop.

**2.** The method of claim 1, wherein the second sub-loop calculates the remaining partial results of the term $XY_i + m_iM + R$ following a decomposition of numbers X, M and R into p-bit digits.

**3.** The method of claim 1, wherein p is chosen so that a binary multiplier of a k-bit operand by a p-bit operand produces a result in less than half a cycle of the processor.

**4.** The method of claim 2, comprising:

- at each iteration j of the first sub-loop, for j going from 0 to k/p - 1, updating a k-bit register (S) with the k most significant bits of the sum of the term $X_{(j)}Y_i + m_{(j)}M_{[k-l:0]}$ and the previous content of the register, where $X_{(j)}$ and $m_{(j)}$ are the p-bit digits of rank j of numbers X and $m_i$;
- at each iteration j of the second sub-loop, for j going from k/p to L/p,

  - updating the register (S) with the k most significant bits of the output of an adder receiving the values $X_{(j)}Y_i$, $m_iM_{(j)}$ and the previous content of the register, where $M_{(j)}$ is the p-bit digit of rank j of number M; and
  - producing a p-bit digit of rank j-k/p of the current result R by adding the p least significant bits of the output of the adder and the p-bit digit of rank j of the previous result R;

• at the end of the second sub-loop, producing the k most significant bits of the current result R as the content of the register.

5. The method of claim 1, wherein k=64 and p=16.

Fig 1A

Fig 1B

Fig 2A

Fig 2B

Fig 3

EP 2 515 228 B1

Fig 4

## RÉFÉRENCES CITÉES DANS LA DESCRIPTION

**Documents brevets cités dans la description**

- US 6185596 B

- US 7543011 B

**Littérature non-brevet citée dans la description**

- **PETER MONTGOMERY.** Modular Multiplication Without Trial Division. *Mathematics of Computation,* 1985, vol. 44, 519-521

- **ÇETIN KAYA KOÇ et al.** Analyzing and Comparing Montgomery Multiplication Algorithms. *IEEE Micro,* Juin 1996, vol. 16 (3), 26-33